Europäisches Patentamt

European Patent Office

Office européen des brevets

Veröffentlichungsnummer: **0 246 437**

**A2**

## EUROPÄISCHE PATENTANMELDUNG

Anmeldenummer: **87105023.3**

Anmeldetag: **04.04.87**

Int. Cl.⁴: **B23D 1/00**

Priorität: **21.05.86 DE 3617004**

Veröffentlichungstag der Anmeldung:
**25.11.87 Patentblatt 87/48**

Benannte Vertragsstaaten:
**AT BE CH DE ES FR GB GR IT LI LU NL SE**

Anmelder: **Michael Weinig GmbH**
**Weinigstrasse 2/4**
**D-6972 Tauberbischofsheim(DE)**

Erfinder: **Heiermann, Klaus**
**Altenbergring 56**
**D-6991 Igersheim(DE)**
Erfinder: **Kröcher, Harro**
**Mannheimer Strasse 267**
**D-6550 Bad Kreuznach(DE)**

Vertreter: **Jackisch, Walter, Dipl.-Ing.**
**Menzelstrasse 40**
**D-7000 Stuttgart 1(DE)**

### Maschine, vorzugsweise Kehlmaschine.

Die Maschine hat einen in einer Werkzeuglagerung gelagerten und in seiner Einbaulage eingespannten Messerkopf (4). Er ist stirnseitig mit jeweils einem Lagerzapfen (10a, 10a') versehen, der in jeweils ein Lager (13,13') einsetzbar ist. Das eine Lager (13') ist in eine den zugehörigen Lagerzapfen (10a) freigebende Lage verstellbar. Aufgrund dieser Ausbildung hat der Messerkopf eine hohe dynamische Stabilität und kann mit einer hohen Drehzahl angetrieben werden. Außerdem hat der Messerkopf (4) einen kleinen Durchmesser.

Figur 3

## Maschine, vorzugsweise Kehlmaschine

Die Erfindung betrifft eine Maschine, vorzugsweise eine Kehlmaschine, nach dem Oberbegriff des Anspruches 1.

Bei solchen Maschinen wird der Messerkopf auf eine Spindel der Maschine aufgeschoben. Der Messerkopf ist hierzu mit einer axial und zentral veralufenden Bohrung versehen. Infolge dieser Bohrung hat der Messerkopf einen verhältnismäßig großen Durchmesser. Auch hat sich gezeigt, daß mit den auf Spindeln sitzenden Messerköpfen die erreichbare Drehzahl begrenzt ist.

Der Erfindung liegt die Aufgabe zugrunde, die gattungsgemäße Maschine so auszubilden, daß sie bei kompakter Ausbildung und der Möglichkeit, den Messerkopf leicht und einfach ein-und auswechseln zu können, mit einer sehr hohen Drehzahl des Messerkopfes arbeiten kann.

Diese Aufgabe wird bei der gattungsgemäßen Maschine erfindungsgemäß mit den kennzeichnenden Merkmalen des Anspruches 1 gelöst.

Bei der erfindungsgemäßen Maschine sitzt der Messerkopf nicht mehr auf der Maschinenspindel, sondern wird mit seinen stirnseitig angeordneten Lagerzapfen unmittelbar in den Lagern drehbar gelagert. Dadurch ergibt sich eine sehr hohe dynamische Stabilität, so daß der Messerkopf mit einer wesentlich höheren Drehzahl angetrieben werden kann als bei den bekannten Ausführungen, die auf einer Spindel sitzen. Da der Messerkopf keine Bohrung für eine Spindel aufweist, kann sein Durchmesser klein gehalten werden, so daß die erfindungsgemäße Maschine kompakt ausgebildet werden kann. Infolge der sehr hohen Drehzahl des Messerkopfes genügt bei den üblichen Vorschüben eine geringere Zahl von Messern, so daß die Anschaffungskosten für einen solchen Messerkopf gering sind und die Schleifkosten zum Nachschleifen der Messer klein gehalten werden können. Da das eine Lager verstellbar ist, kann der Messerkopf einfach ein-und ausgewechselt werden. Dieser Vorgang kann ohne weiteres von einem Roboter vorgenommen werden. Die Umrüstzeiten zum Auswechseln des Messerkopfes können darum sehr gering gehalten werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1 in schematischer Darstellung eine erste Ausführungsform einer erfindungsgemäßen Maschine,

Fig. 2 in schematischer Darstellung eine zweite Ausführungsform einer erfindungsgemäßen Maschine,

Fig. 3 in schematischer Darstellung eine dritte Ausführungsform einer erfindungsgemäßen Maschine,

Fig. 4A in schematischer Darstellung eine vierte Ausführungsform einer erfindungsgemäßen Maschine,

Fig. 4B eine Ansicht in Richtung des Pfeiles IV in Fig. 4A,

Fig. 5 teilweise im Axialschnitt und teilweise in Ansicht eine Lagerung eines Werkzeuges der erfindungsgemäßen Maschine,

Fig. 6 eine Stirnansicht des Werkzeuges gemäß Fig. 5,

Fig. 7 teilweise im Axialschnitt und teilweise in Ansicht einen Teil einer weiteren Ausführungsform einer Werkzeuglagerung der erfindungsgemäßen Maschine.

Die im folgenden beschriebenen Maschinen haben einen rotierenden Messerkopf, der in einfacher Weise gelagert und in die entsprechende Werkzeuglagerung rasch eingesetzt werden kann. Für den Messerkopf ist keine Spindel vorgesehen; vielmehr ist der Messerkopf stirnseitig mit Lagerzapfen versehen, mit denen der Messerkopf in der Werkzeuglagerung gelagert werden kann. Die Maschinen sind vorzugsweise Kehlmaschinen, können aber auch andere Maschinen mit drehbaren Messerköpfen sein, wie etwa Hobelwerkmaschinen und dergleichen.

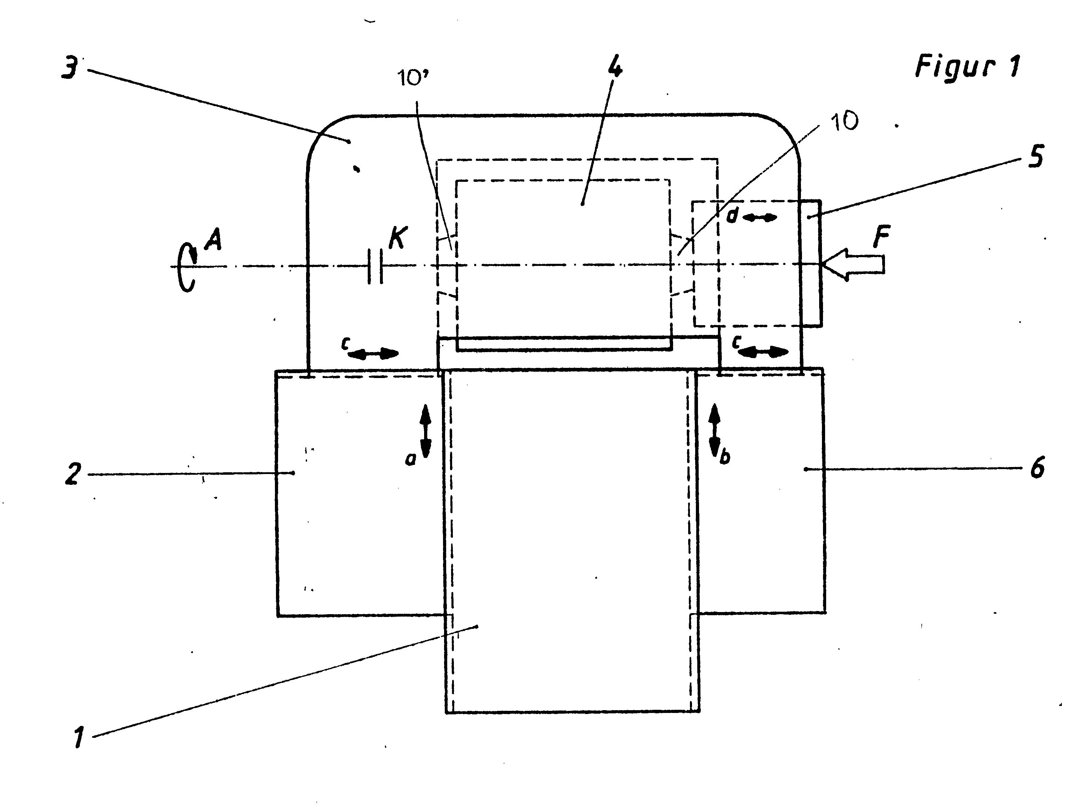

Die Maschine gemäß Fig. 1 hat einen Ständer 1, längs dem in Pfeilrichtung a und b jeweils ein Schlitten 2 und 6 vertikal verfahrbar ist. Sie tragen einen Träger 3, der in Pfeilrichtung c horizontal auf den Schlitten 2, 6 verschiebbar ist. Im Träger 3 ist ein Messerkopf 4 drehbar gelagert, der von einem Antrieb A rotierend angetrieben wird. Damit der Messerkopf 4 aus dem Träger 3 herausgenommen werden kann, ist zwischen dem Antrieb A und dem Messerkopf 4 eine (nicht näher dargestellte) Kupplung K vorgesehen. Der Messerkopf 4 weist an seinen beiden Stirnseiten Lagerzapfen 10, 10' auf, von denen der Lagerzapfen 10 in einer Lagerbuchse 5 und der Lagerzapfen 10' in einem (nicht dargestellten) Lager drehbar gelagert ist. Die Lagerzapfen 10, 10' sind kegelstumpfförmig ausgebildet, so daß sie den Messerkopf 4 in seiner Einbaulage zentrieren. Zum Einspannen des Werkzeugkopfes 4 wird auf die Lagerbuchse 5 eine in Richtung des Pfeiles F wirkende Kraft aufgebracht, durch welche der Messerkopf 4 in seiner Einbaulage eingespannt wird. Die Kraft F kann durch federnde Teile, vorzugsweise durch eine Kolben-Zylinder-Vorrichtung aufgebracht werden. Zum Einspannen oder zum Ausbau des Messerkopfes 4 wird die Lagerbuchse 5 in Richtung des Doppelpfeiles d axial verschoben. Hierbei ist die Lagerbuchse 5 im Träger 3 geführt und kann zum Auswechseln des Messerkopfes so weit verschoben werden, daß er quer zur Achsrichtung aus dem Träger 3 herausgenommen bzw. in ihn eingesetzt werden kann.

Zur Axialverstellung des Messerkopfes 4 wird der Träger 3 in Pfeilrichtung c verstellt. Ist eine Vertikalverstellung des Messerkopfes 4 notwendig, dann wird der Träger 3 mit den Schlitten 2 und 6 in Pfeilrichtung a und b längs des Ständers 1 verschoben.

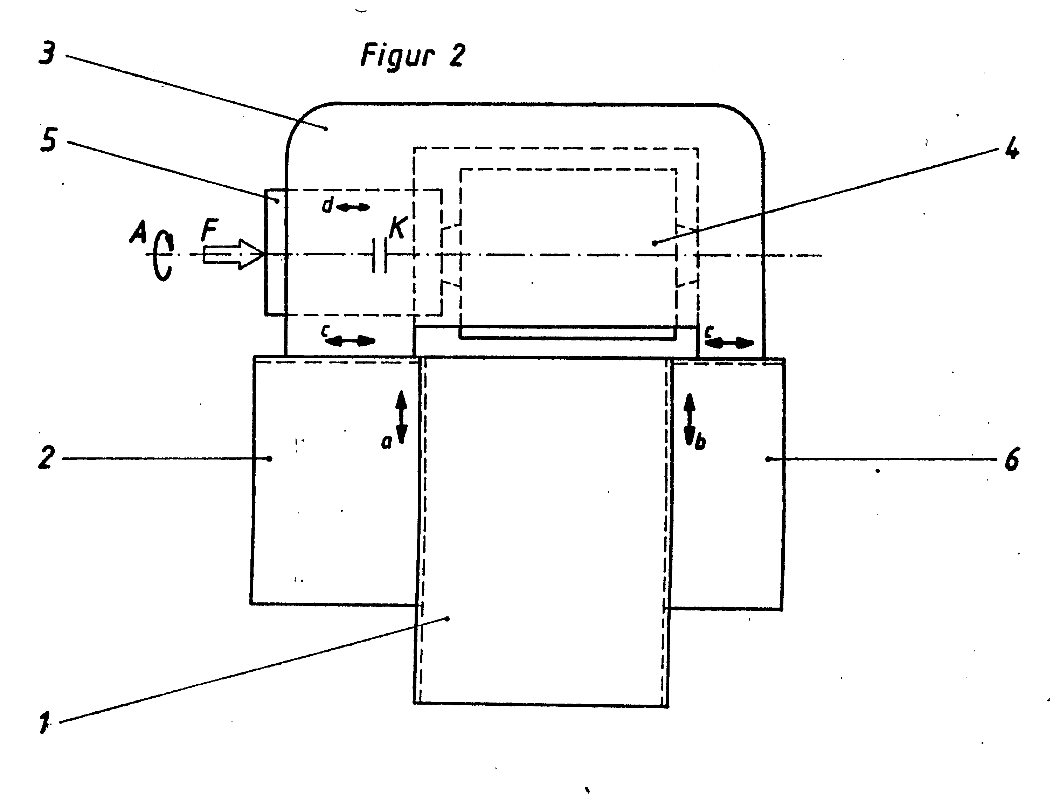

Bei der Ausführungsform gemäß Fig. 2 ist die Lagerbuchse 5 auf der anderen Seite des Trägers 3, das heißt auf der Antriebsseite, vorgesehen. In diesem Falle befindet sich die Kupplung K in der Lagerbuchse 5. Im übrigen ist diese Ausführungsform gleich ausgebildet wie das Ausführungsbeispiel nach Fig. 1.

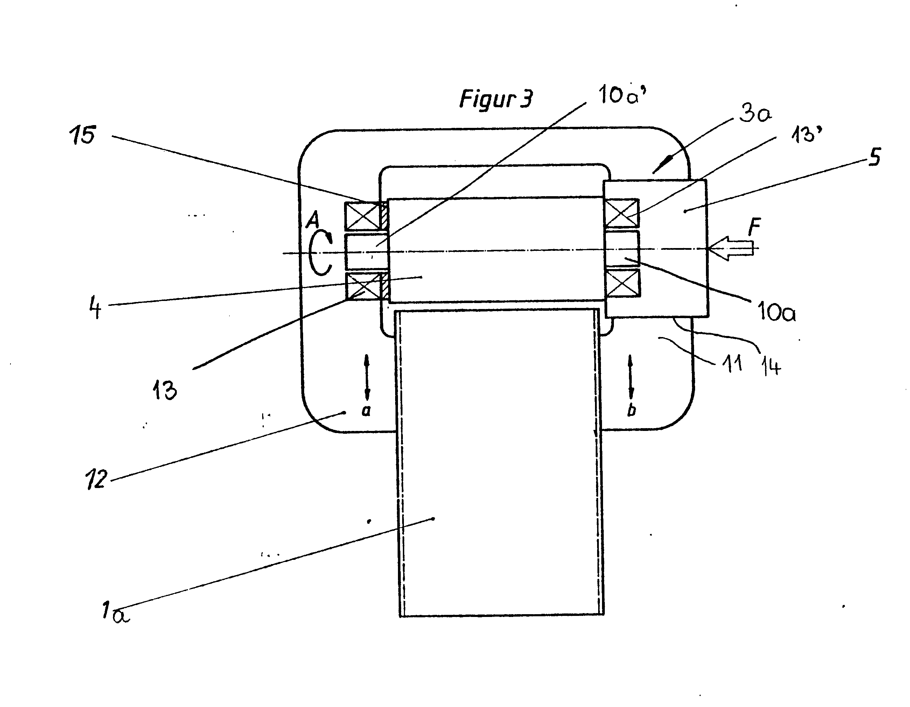

Fig. 3 zeigt eine Maschine, deren Ständer 1a gleich ausgebildet ist wie beim Ausführungsbeispiel nach Fig. 1. Der Träger 3a ist jedoch unmittelbar am Ständer 1a in Pfeilrichtung a, b vertikal verfahrbar geführt. Der Träger 3a hat etwa C-Form. In seinem einen Schenkel 11 ist die Lagerbuchse 5 untergebracht, in welcher der Werkzeugkopf 4 mit seinem Lagerzapfen 10a drehbar gelagert ist. Im anderen Schenkel 12 des Trägers 3a befindet sich ein Lager 13, das den anderen Lagerzapfen 10a' des Messerkopfes 4 aufnimmt. Im Gegensatz zu den beiden zuvor beschriebenen Ausführungsbeispielen sind die Lagerzapfen 10a, 10a' zylindrisch ausgebildet. Die Lagerbuchse 5 ist in einer Öffnung 14 im Trägerschenkel 11 axial verschiebbar geführt. Die Lagerbuchse 5 wird wiederum in Richtung des Pfeiles F belastet, wenn der Messerkopf 4 eingespannt werden soll. Die Lagerbuchse 5 ist ebenfalls mit einem Lager 13' versehen, das den Lagerzapfen 10a aufnimmt.

Zum Auswechseln des Messerkopfes 4 kann die Lagerbuchse 5 axial aus der Öffnung 14 des Trägerschenkels 11 herausgefahren werden. Da der Durchmesser der Öffnung 14 größer ist als der Durchmesser des Messerkopfes 4, läßt er sich bequem durch die große Öffnung wechseln. Der Träger 3a mit dem eingespannten Messerkopf 4 kann in Richtung der Pfeile a, b längs des Ständers 1a vertikal verschoben werden. Zur Axialeinstellung des Messerkopfes 4 sind Distanzringe 15 vorgesehen, die entsprechend den erforderlichen Lageveränderungen unterschiedliche Dicke haben. Sie werden zwischen dem Lager 13 im Trägerschenkel 12 und der Stirnseite des Messerkopfes 4 eingesetzt und zwischen diesen beiden Teilen bei eingebautem Messerkopf 4 eingespannt.

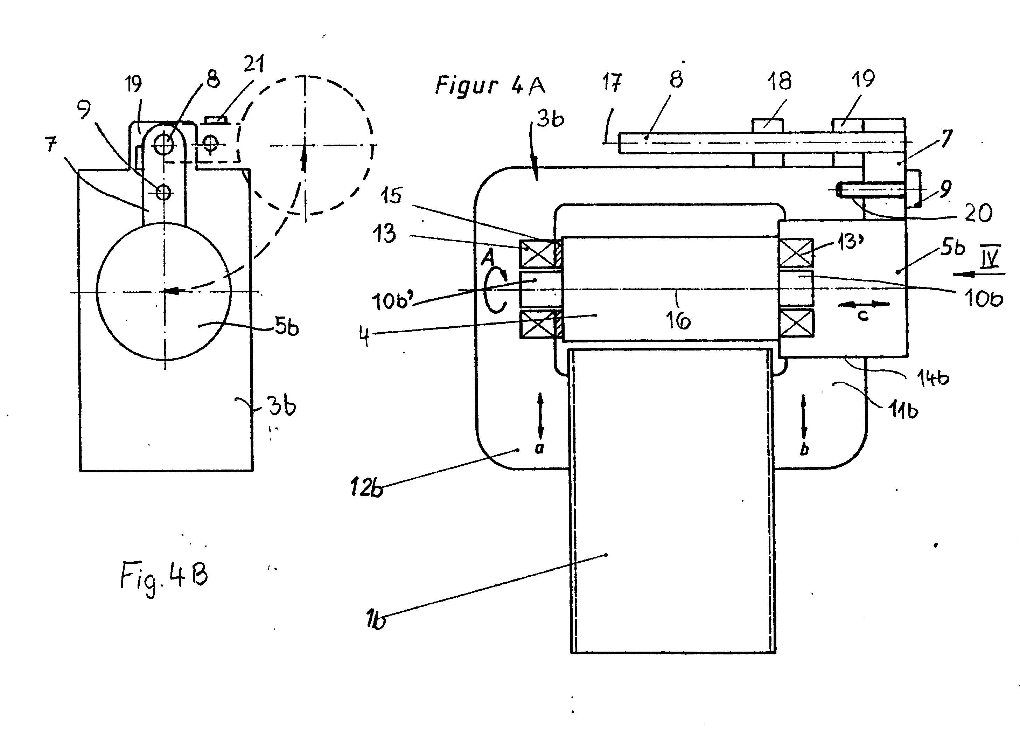

Bei der Ausführungsform nach den Fig. 4A und 4B ist der Messerkopf 5b außer axial verschieblich auch um eine parallel zur Achse 16 des Messerkopfes 4 liegende Achse 17 schwenkbar. Auf dem Träger 3b befinden sich zwei mit Abstand hintereinander liegende Führungsteile 18 und 19 (Fig. 4A), durch welche eine Führungsstange 8 verläuft. Ihr eines Ende ist an einem Arm 7 befestigt, der seinerseits fest mit der Lagerbuchse 5b verbunden ist. Der Arm 7 wird von einem Sicherungsbolzen 9 durchsetzt, der axial verschieblich im Arm gelagert ist und mit dem der Arm in seinen verschiedenen Stellungen am Träger 3b arretiert werden kann. Der Träger 3b ist mit einer Stecköffnung 20 versehen, in welche der Sicherungsbolzen 9 in der Arbeitsstellung der Lagerbuchse 5b eingreift. Der Träger 3b mit dem Messerkopf 4 und der Lagerbuchse 5b ist im übrigen gleich ausgebildet wie bei der Ausführungsform gemäß Fig. 3. Er kann längs des Ständers 1b vertikal in Richtung der Pfeile a und b verschoben werden. Im Trägerschenkel 12b ist das Lager 13 für den einen Lagerzapfen 10b' des Messerkopfes 4 untegebracht, während der andere Trägerschenkel 11b die Öffnung 14b für die Lagerbuchse 5b aufweist.

Soll der Messerkopf 4 ausgewechselt werden, wird die Lagerbuchse 5b axial aus der Öffnung 14b geschoben, bis sie vollständig von der Öffnung freikommt. Bei diesem Verschiebevorgang wird auch die über den Arm 7 fest mit der Lagerbuchse 5b verbundene Führungsstange 8 in den Führungsteilen 18 und 19 auf dem Träger 3b verschoben. Wenn die Lagerbuchse 5b aus der Öffnung 14b freikommt, wird sie um die Achse 17 seitlich aus dem Bereich der Öffnung 14 weggeschwenkt (gestrichelte Linien in Fig. 4B). Auf dem Träger 3b befindet sich im Bereich neben den Führungsteilen 18 und 19 ein Halterteil 21 mit einer Stecköffnung, in welche der Sicherungsbolzen 9 in der hochgeschwenkten Lage zur Sicherung der Lagerbuchse 5b gesteckt wird. Nunmehr kann der Messerkopf 4 ohne Schwierigkeiten durch die Öffnung 14b aus dem Lager 13 herausgezogen werden. Soll der Messerkopf 4 in den Träger 3b eingesetzt werden, dann wird die Lagerbuchse 5b ebenfalls hochgeschwenkt und arretiert. Durch die Öffnung 14b läßt sich dann der Messerkopf bequem mit seinem Lagerzapfen 10b' in das Lager 13 einführen. Hierbei wird zwischen dem Lager 13 und der Stirnseite des Messerkopfes 4 der entsprechende Distanzring 15 eingelegt, der bei eingespanntem Messerkopf zwischen dem Lager 13 und dem Messerkopf eingeklemmt wird. Sobald der Messerkopf 4 mit seinem Lagerzapfen 10b' in das Lager 13 geschoben worden ist, wird der Sicherungsbolzen 9 zurückgezogen, so daß er vom Halterteil 21 freikommt. Der Arm 7 kann darum mit der Lagerbuchse 5b nach unten geschwenkt werden.

Anschließend wird sie gegen den Messerkopf 4 axial verschoben, wobei dessen Lagerzapfen 10b in das Lager 13' gelangt. Über die Rundführung 8, 18, 19 läßt sich die Lagerbuchse 5b sehr einfach axial verschieben. In der in Fig. 4A dargestellten Endlage wird der Sicherungsbolzen 9 in die Stecköffnung 20 gesteckt, so daß der Arm 7 und damit die Lagerbuchse 5b einwandfrei zentriert ist. Anschließend wird die Lagerbuchse 5b in der beschriebenen Weise mit Kraft beaufschlagt, um den Messerkopf 4 in der Werkzeuglagerung zu spannen.

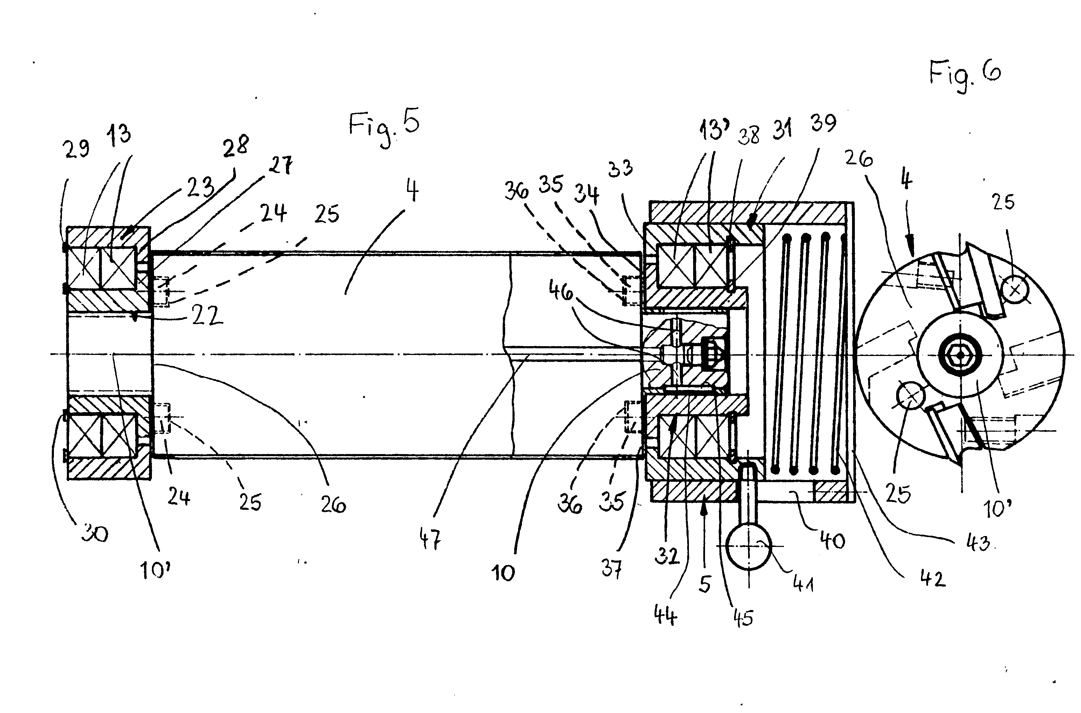

Die Figuren 5 und 6 zeigen im einzelnen den Messerkopf 4 mit einer weiteren Ausführungsform einer Werkzeuglagerung. Das Lager 13 liegt zwischen einem Innenring 22 und einem Außenring 23. Die beiden Ringe 22, 23 sind im Träger 3, 3a, 3b untergebracht. Der Innenring 22 weist auf seiner dem Messerkopf 4 zugewandten Seite wenigstens zwei axial vorstehende Zapfen 24 auf, die in Einbaulage in entsprechende Vertiefungen 25 in der benachbarten Stirnseite 26 des Messerkopfes eingreifen. Die Zapfen 24 sind an einem endseitigen, radial nach außen gerichteten Flansch 27 des Innenringes 22 vorgesehen, der mit geringem Abstand einem endseitigen, radial nach innen gerichteten Flansch 28 des Außenringes 23 gegenüberliegt. Das Lager 13 ist durch Sicherungsringe 29 und 30 axial zwischen den beiden Ringen 22, 23 gesichert. Im dargestellten Ausführungsbeispiel sind zwei Lager 13 axial nebeneinander angeordnet.

Das gegenüberliegende Lager 13' -im Ausführungsbeispiel wieder zwei axial nebeneinander liegende Lager - liegt zwischen einem Innenring 32 und einem Außenring 31. Der Außenring 31 hat endseitig einen radial nach innen gerichteten Flansch 33, der mit geringem radialen Abstand einem endseitigen, raidal nach außen gerichteten Flansch 34 des Innenringes 32 gegenüberliegt. Der Flansch 34 des Innenringes 32 weist wiederum wenigstens zwei axial abstehende Zapfen 35 auf, die in der Einbaulage in Vertiefungen 36 in der Stirnseite 37 des Messerkopfes 4 eingreifen. Die Lager 13' sind wiederum durch Sicherungsringe 38 und 39 axial zwischen den beiden Ringen 31 und 32 gesichert. Der Außenring 31 liegt an der Innenwandung der Lagerbuchse 5 an. Sie hat einen axial verlaufenden Längsschlitz 40, durch den eine am Außenring 31 vorgesehene Handhabe 41 ragt, mit der die beiden Ringe 31, 32 und das Lager 13' gegen die Kraft einer Druckfeder 42 in der Lagerbuchse 5 verschoben werden können. Die Druckfeder 42 stützt sich an einem Boden 43 der Lagerbuchse 5 und am Außenring 31 ab.

Soll der Messerkopf 4 ausgewechselt werde dann wird mit der Handhabe 41 das Lager 13' r den beiden Ringen 31, 32 gegen die Kraft c Druckfeder 42 axial verschoben. Sobald die Han habe 41 am Schlitzende zur Anlage kommt, wi auch die Lagerbuchse 5 axial verschoben. D maximale Verschiebeweg von Lager und Lage buchse entspricht der doppelten Länge des Lage zapfens 10 bzw. 10'. Dadurch ist sichergestellt, da der Lagerzapfen 10 vollständig aus der Lage buchse 5 und aus dem Lager 13 heraustritt, so da der Messerkopf 4 ohne Schwierigkeiten aus de Träger 3 herausgenommen werden kann.

Bei dem in den Fig. 5 und 6 dargestellte Ausführungsbeispiel sind die Lagerzapfen 10, 1 als sogenannte Hydrobuchsen ausgebildet. S zeichnen sich dadurch aus, daß sie einen umfang seitigen dünnen Wandabschnitt 44 aufweisen, unte dem sich ein Druckmittelraum 45 befindet. In ih münden radial verlaufende Zuführbohrungen 4( die an eine axial verlaufende zentrale Bohrung 4 anschließen. Sie durchsetzt den Messerkopf 4 un verläuft bis zum gegenüberliegenden Lagerzapfe 10', der in gleicher Weise wie der Lagerzapfen 1( ausgebildet ist. Wenn der Werkzeugkörper 4 in di Lager 13, 13' eingesetzt ist, wird über die Bohrun gen 47, 46 Druckmittel in die Räume 45 eingeleitet wodurch die Wandabschnitte 44 fest an die Innen wandung der Innenringe 22, 31 gepreßt werden, so daß der Messerkopf 4 einwandfrei eingespannt ist Die Zuführleitungen 46,47 sind an eine Druckmittel quelle angeschlossen.

Aufgrund der beschriebenen Ausbildung kann der Messerkopf 4 beispielsweise mit einem Roboter ein-und ausgebaut werden.

Bei einer anderen (nicht dargestellten) Ausführungsform ist der Schlitz 40 so lang, daß das Lager 13' um die doppelte Länge des Lagerzapfens 10, 10' verschoben werden kann. Der Messerkopf 4 kann dann ohne Schwierigkeiten ausgewechselt werden.

Bei einer weiteren (nicht dargestellten) Ausführungsform ist das Lager 13' nicht in einer Lagerbuchse, sondern unmittelbar im Träger 3, 3a, 3b gelagert. Auch dann läßt sich das Lager zum Auswechseln des Messerkopfes 4 einfach verschieben.

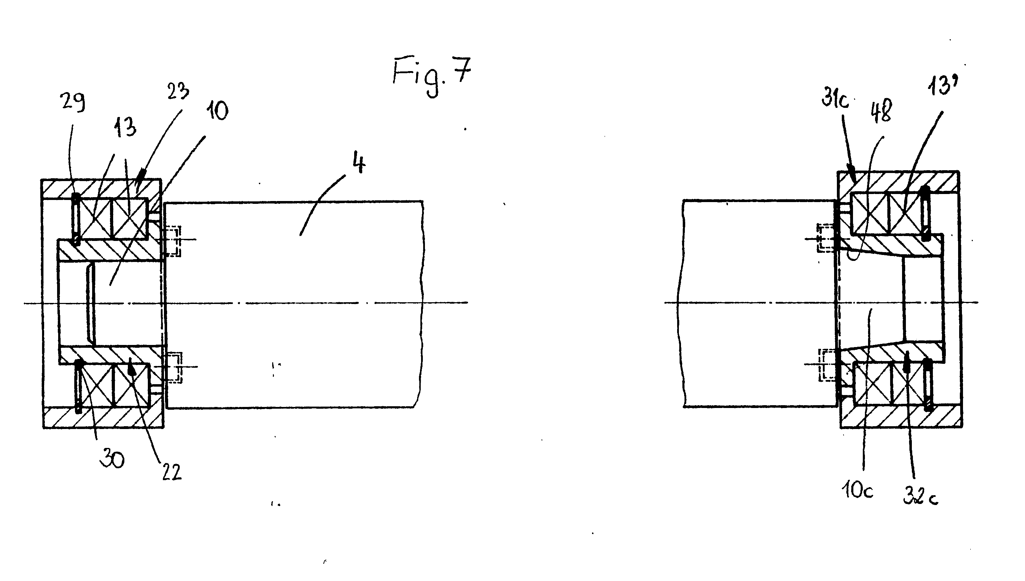

Fig. 7 zeigt zwei Möglichkeiten der Ausbildung der Lagerzapfen des Messerkopfes 4. Der Messerkopf kann die zylindrisch ausgebildeten Lagerzapfen aufweisen, wie er in Fig. 7 in der linken Hälfte dargestellt ist. Dieser Lagerzapfen 10 ist in den Lagern 13 untergebracht, die wiederum durch die Sicherungsringe 29, 30 in den Ringen 22 und 23 axial gesichert sind. Der Außenring 23 ist länger als der Innenring 22, wie dies auch für den Außenring 31 der Ausführungsform nach den Fig. 5 und 6 der Fall ist. Der Außenring 23 ist in der (nicht dargestellten) Lagerbuchse axial verschiebbar untergebracht, so daß das Lager von zylindrischen Lagerzapfen 10 des Messerkopfes 4 abgeschoben werden kann.

Der auf der rechten Seite der Fig.7 dargestellte Lagerzapfen 10c ist kegelstumpfförmig ausgebildet. Der Innenring 32c hat eine auf dem Mantel eines gedachten Kegels liegende Innen fläche 48, an der der Lagerzapfen 10c in der Einbaulage anliegt. Der Kegelwinkel des Lagerzapfen 10c ist kleiner als der Winkel der Selbsthemmung, so daß der Messerkopf 4 ohne Schwierigkeiten aus dem Lager 13' herausgezogen werden kann. Im übrigen sind der Außenring 31c und der Innenring 32c gleich ausgebildet wie bei der Ausführungsform nach den Fig. 5 und 6.

Zum Einspannen des Messerkopfes 4 wird die (nicht darge(stellte) Lagerbuchse des jeweiligen Lagers mit Kraft beaufschlagt (vgl. beispielsweise Fig. 3) , so daß der Messerkopf 4 mit seinem Lagerzapfen 10, 10c in den Innenring 22,32c gedrückt und verspannt wird.

Da bei den beschriebenen Ausführungsformen der Messerkopf 4 nicht auf einer Spindel gelagert ist, sondern über die endseitigen Lagerzapfen direkt in den entsprechenden Lagern gelagert ist, kann infolge der dadurch gewonnenen dynamischen Stabilität mit einer sehr hohen Drehzahl des Messerkopfes gearbeitet werden, wobei diese Drehzahl bis etwa 12.000 U/min betragen kann. kann. Dadurch können sehr hohe Vorschubgeschwindigkeiten der mit dem Messerkopf zu bearbeitenden Werkstücke erreicht werden. Da der Messerkopf 4 keine Axialbohrung benötigt - weil er nicht auf eine Spindel aufgeschoben wird -, kann der Durchmesser des Messerkopfes klein sein, so daß die mit einem solchen Messerkopf ausgerüstete Maschine kompakt ausgebildet werden kann. Infolge der hohen Drehzahl des Messerkopfes ist bei den üblichen Vorschüben auch nur eine geringere Messerzahl notwendig, wodurch sich nicht nur die Anschaffungskosten, sondern auch die Schliefkosten erheblich verringern, da nur noch eine kleinere Zahl von Messern nachgeschliffen werden muß. Mit der beschriebenen Lagerung können die Messerköpfe 4 einfach und rasch ausgewechselt werden. Die verschiebbare Lagerbuchse 5, 5b wird in der Einbaulage des Messerkopfes durch geeignete, bekannte Mittel geklemmt. Ist der Lagerzapfen 10c kegelstumpfförmig ausgebildet, muß der Messerkopf 4 axial vorgespannt werden, wofür Federn, hydraulische oder pneumatische Kolben-Zylinder-Anordnungen, Exzenter oder dergleichen vorgesehen sein können, welche die entsprechenden axialen Vorschubkräfte auf die Lagerbuchse ausüben. Sind hingegen die Lagerzapfen 10, 10' als massive Zylinderzapfen (Fig. 5 und 6) oder als Hydrobuchsen ausgebildet, dann ist eine axiale Verspannung des Messerkopfes nicht notwendig. Bei der Hydrobuchse wird zusätzlich durch elastische Verformung der dünnen Wandabschnitte 44 der Messerkopf axial einwandfrei in den Innenring 22, 32 der Lager eingespannt.

Infolge der hohen dynamischen Stabilität und Steifigkeit der beschriebenen Werkzeuglagerung kann eine äußerst glatte Oberfläche der bearbeiteten Werkstücke erreicht werden, ohne daß in der Maschine Jointsteine zum Nachschleifen der Messer des Messerkopfes notwendig sind. Infolge der hohen dynamischen Steifigkeit der Werkzeuglagerung kann der Messerkopf 4 immer seine maximale Länge aufweisen. Die bei den bekannten, auf Spindel aufgeschobenen Messerköpfen bei hohen Belastungen bzw. bei dünnen und/oder langen Spindel auftretenden unregelmäßigen Hobelbilder sind bei Verwendung der beschriebenen Messerköpfe und Werkzeuglagerungen nicht zu erwarten.

## Ansprüche

1. Maschine, vorzugsweise Kehlmaschine, mit mindestens einem drehbar angetriebenen Messerkopf, der in einer Werkzeuglagerung gelagert und in seiner Einbaulage eingespannt ist, dadurch gekennzeichnet, daß der Messerkopf (4) stirnseitig jeweils einen Lagerzapfen (10,10'; 10a, 10a'; 10b, 10b'; 10c) aufweist, der in jeweils ein Lager (13,13') einsetzbar ist, von denen zumindest ein Lager (13, 13') in eine den zugehörigen Lagerzapfen (10,10';10a,10a';10b,10b';10c) freigebende Lage verstellbar ist.

2. Maschine nach Anspruch 1, dadurch gekennzeichnet, daß der Lagerzapfen (10,10'; 10a,10a';10b,10b') zylindrisch ausgebildet ist.

3. Maschine nach Anspruch 1, dadurch gekennzeichnet, daß der Lagerzapfen (10,10'; 10c) kegelstumpfförmig ausgebildet ist, und daß das dem kegelstumpfförmigen Lagerzapfen (10,10';10c) zugeordnete Lager (13') vorzugsweise eine auf dem Mantel eines gedachten Kegels liegende Anlagefläche (48) aufweist.

4. Maschine nach Anspruch 3, dadurch gekennzeichnet, daß der Kegelwinkel des Lagerzapfens (10,10';10c) kleiner ist als der Winkel der Selbsthemmung.

5. Maschine nach einem der Ansprüche 1 bis 4, dadurch gekennzeichnet, daß das verschiebbare Lager (13,13') in einer axial verschiebbaren Lagerbuchse (5,5b) untergebracht ist, die vorzugsweise in einem Träger (3,3a,3b), der die Lager (13,13') für den Messerkopf (4) aufweist, untergebracht und vorzugsweise in einer Schiebeführung (14, 14b) des Trägers (3, 3a, 3b) angeordnet ist.

6. Maschine nach Anspruch 5, dadurch gekennzeichnet, daß die Lagerbuchse (5b) um eine parallel zur Achse (16) des Messerkopfes (4) liegende Achse (17) schwenkbar ist und vorzugsweise einen quer zu ihrer Achse verlaufenden Arm (7) aufweist, der mit einer weiteren Schiebeführung (8,18,19) fest verbunden ist.

7. Maschine nach Anspruch 6, dadurch gekennzeichnet, daß die weitere Schiebeführung (8,18,19) eine Führungsstange (8) aufweist, deren Achse vorzugsweise die Schwenkachse (17) der Lagerbuchse (5b) bildet, und die insbesondere in mindestens einem Führungsteil (18,19) verschiebbar ist, der vorzugsweise auf dem Träger (3b) vorgesehen ist.

8. Maschine nach einem der Ansprüche 5 bis 7, dadurch gekennzeichnet, daß der Träger (3,3a,3b) mit dem Messerkopf (4) vertikal verstellbar ist.

9. Maschine nach einem der Ansprüche 5 bis 8, dadurch gekennzeichnet, daß der Träger (3) horizontal verstellbar ist.

10. Maschine nach einem der Ansprüche 5 bis 9, dadurch gekennzeichnet, daß zur Axialverstellung des Messerkopfes (4) relativ zum Träger (3a) Distanzringe (15) vorgesehen sind, die zwischen dem Messerkopf (4) und dem Träger (3a) eingespannt sind.

11. Maschine nach einem der Ansprüche 1 bis 10, dadurch gekennzeichnet, daß das Lager (13') gegen Federkraft verschiebbar ist.

12. Maschine nach einem der Ansprüche 1 bis 11, dadurch gekennzeichnet, daß das Lager (13') relativ zur Lagerbuchse (5) verschiebbar ist und vorzugsweise einen Schlitz (40) aufweist, durch den eine mit dem Lager (13') verbundene Handhabe (41) ragt, mit der das Lager (13') und die Lagerbuchse (5) verschiebbar sind.

13. Maschine nach einem der Ansprüche 1 bis 12, dadurch gekennzeichnet, daß der Lagerzapfen (10,10') einen elastisch verformbaren Wandabschnitt (44) aufweist, der mindestens einen Druckraum (45) abschließt, der über Zuführleitungen (46,47) mit einer Druckmittelquelle verbunden ist.

Figur 1

# Figur 2

0 246 437

Figur 3

0 246 437

Figur 4A

Fig. 4B

0 246 437

Fig. 6

Fig. 5

Fig. 7

0 246 437